# EUROPEAN PATENT SPECIFICATION

(11) **EP 2 833 732 B1**
(45) Date of publication and mention of the grant of the patent: **11.03.2020**
(21) Application number: 13712381.6
(22) Date of filing: 15.03.2013
(51) Int. Cl.: A23G 1/36, A23G 1/30, A23G 1/46

(54) **CHOCOLATE WITH MILK FAT FRACTIONS**
SCHOKOLADE MIT MILCHFETTFRAKTIONEN
CHOCOLAT AVEC DES FRACTIONS DE MATIÈRE GRASSE DU LAIT

(30) Priority: 03.04.2012 EP 12162922
(43) Date of publication of application: 11.02.2015
(73) Proprietor: FrieslandCampina Nederland B.V., 3818 LE Amersfoort (NL)
(72) Inventor: BOERBOOM, Fransiscus Johannes Gerardus, NL-3707 BH Zeist (NL); FISCHER, Sabine, NL-5731 TP Mierlo (NL)
(74) Representative: FrieslandCampina Nederland B.V.
(86) International application number: PCT/NL2013/050186
(87) International publication number: WO 2013/151423

(56) References cited:
- EP-A1- 2 030 510
- GB-A- 2 168 071
- LOHMAN M H ET AL: "EFFECT OF MILK FAT FRACTIONS ON FAT BLOOM IN DARK CHOCOLATE", JOURNAL OF THE AMERICAN OIL CHEMISTS' SOCIETY, SPRINGER, BERLIN, DE, vol. 71, no. 3, 1 March 1994 (1994-03-01), pages 267-276, XP000427179, ISSN: 0003-021X, DOI: 10.1007/BF02638052 cited in the application
- KAYLEGIAN K E: "Milkfat fractions in chocolate", MANUFACTURING CONFECTIONER, MANUFACTURING CONFECTIONER PUBLISHING COMPANY, US, vol. 77, no. 5, 1 January 1997 (1997-01-01), pages 79-84, XP008155850, ISSN: 0025-2573
- BILJANA PAJIN ET AL: "Influence of high-melting milk fat fraction on quality and fat bloom stability of chocolate", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 220, no. 3-4, 1 March 2005 (2005-03-01), pages 389-394, XP019328059, ISSN: 1438-2385, DOI: 10.1007/S00217-004-1077-0
- BYSTROM C E ET AL: "Evaluation of milk fat fractionation and modification techniques for creating cocoa butter replacers", LWT- FOOD SCIENCE AND TECHNOLOGY, ACADEMIC PRESS, UNITED KINGDOM, vol. 27, no. 2, 1 January 1994 (1994-01-01), pages 142-150, XP002478253, ISSN: 0023-6438, DOI: 10.1006/FSTL.1994.1030
- RANSOM-PAINTER K L ET AL: "Incorporation of milk fat and milk fat fractions into compound coatings made from palm kernel oil", JOURNAL OF DAIRY SCIENCE, AMERICAN DAIRY SCIENCE ASSOCIATION, US , vol. 80, no. 10 1 October 1997 (1997-10-01), pages 2237-2248, XP008155845, ISSN: 0022-0302 Retrieved from the Internet: URL:http://www.journalofdairyscience.org/i ssues [retrieved on 2012-09-11]
- HARTEL R W: "Applications of milk-fat fractions in confectionery products", JOURNAL OF THE AMERICAN OIL CHEMISTS' SOCIETY, SPRINGER, BERLIN, DE, vol. 73, no. 8, 1 August 1996 (1996-08-01) , pages 945-953, XP008155853, ISSN: 0003-021X, DOI: 10.1007/BF02523401
- ZIEGLEDER G ET AL: "Pralines (IV). Influence of milk fat on fat bloom. (translated)", SÜSSWARENTECHNIK, RHENANIA-FACHVERLAG, vol. 53, no. 3, 1 January 2008 (2008-01-01), pages 12-14, XP008155869, ISSN: 0173-7643
- TALBOT G: "Bloom and migration", CONFECTIONERY PRODUCTION, SPECIALISED PUBLICATIONS LTD., SURREY, GB, vol. 76, no. 3, 1 January 2010 (2010-01-01), pages 18-19, XP008155859, ISSN: 0010-5473
- NOBEL S ET AL: "Technofunctional barrier layers for preventing fat bloom in triple-shot pralines", FOOD RESEARCH INTERNATIONAL, ELSEVIER APPLIED SCIENCE, BARKING, GB, vol. 42, no. 1, 1 January 2009 (2009-01-01), pages 69-75, XP025769648, ISSN: 0963-9969, DOI: 10.1016/J.FOODRES.2008.08.011 [retrieved on 2008-08-31] cited in the application
- SONWAI S ET AL: "Controlling fat bloom formation in chocolate - Impact of milk fat on microstructure and fat phase crystallisation", FOOD CHEMISTRY, ELSEVIER LTD, NL, vol. 119, no. 1, 1 March 2010 (2010-03-01) , pages 286-297, XP026692050, ISSN: 0308-8146, DOI: 10.1016/J.FOODCHEM.2009.06.031 [retrieved on 2009-06-21] cited in the application
- J. BRICKNELL ET AL: "Relation of fat bloom in chocolate to polymorphic transition of cocoa butter", JOURNAL OF THE AMERICAN OIL CHEMISTS' SOCIETY, vol. 75, no. 11, 1 November 1998 (1998-11-01), pages 1609-1615, XP055013543, ISSN: 0003-021X, DOI: 10.1007/s11746-998-0101-0
- DIMICK P S: "FORMULATION OF MILK CHOCOLATE USING MILKFAT FRACTIONS", AUSTRALIAN JOURNAL OF DAIRY TECHNOLOGY, DAIRY INDUSTRY ASSOCIATION OF AUSTRALIA, MELBOURNE, AU, vol. 51, no. 2, 1 October 1996 (1996-10-01), pages 123-126, XP000633449, ISSN: 0004-9433

## Description

### The invention

The present invention is directed to praline or filled chocolate comprising a chocolate composition as coating comprising a milk fat fraction wherein the milk fat fraction has a SFC30 of less than 30%. In addition, the present invention is directed to a method to produce such filled chocolates or pralines.

### Background

A bloomed chocolate is characterized by the loss of the initial gloss of the surface, giving rise to a more or less white aspect. Fat bloom can have different appearances, from a uniform dull grey to a marble aspect, as well as from small individual white points to large white spots on the chocolate. It can be due to many factors, including improper processing conditions, composition and temperature. One of the problems in characterizing bloom is its plurality of shape and also of formation conditions. Fat bloom has been studied since the beginning of the last century, with an increase in the knowledge of when and where it occurs. Numerous theories have been proposed to explain bloom formation, but so far none has covered all the multiplicity of bloom or taken into account all of the scientific data. Two main types of fat bloom can be distinguished: fat bloom on plain chocolate and fat bloom on filled chocolate. Fat bloom development on plain chocolate has already been studied intensively. Several situations are known to lead to the development of this type of fat bloom: improper tempering, cooling too quickly, or storage temperatures that are too high or fluctuating. Fat bloom development on plain chocolate can be controlled by means of proper tempering, proper cooling conditions, proper storage temperatures, *etc.* Filled chocolates are often characterized by a high oil content center. These products are more prone to bloom than plain chocolate. This type of fat bloom is caused by migration of lipid fractions of the filling into the chocolate, and it is therefore referred to as migration bloom. Most fillings are mainly composed of vegetable fats differing from cocoa butter. Cocoa butter in chocolate contains mostly POP, POS and SOS (S: Stearin, O: Olein, P: Palmitine, L: Laurin). Hazelnut oil, for example, contains mainly triolein (OOO) and other triacylglycerols based on linolenic acid (LOO, LLO, LLL). Liquid lipids or solid crystals in a liquid matrix can migrate to the surface. The uneven distribution leads to an intense migration of the lipid fractions of the filling into the chocolate and a weak diffusion of solid cocoa butter of the chocolate layer into the filling. The liquid components diffuse much faster than the solid ones, and this leads to a one-sided migration from the filling into the chocolate. Fat bloom development occurs by recrystallization of the migrated fats on the surface. The mono-unsaturated triacylglycerols of cocoa butter dissolve in the liquid fat and can also migrate to the surface, where they crystallize. It is known that production parameters and storage conditions play a role in migration speed. However, it is not clear yet how migration fat bloom can be successfully prevented or delayed. In the literature, the difference between polymorphic fat bloom on plain chocolate and migration fat bloom on filled chocolate is often overlooked, and results are often generalized. Most often bloom in the prior art is investigated in plain chocolate, without filling.

Milk fat has been used previously to inhibit bloom (Sonwai and Rousseau, Food Chemistry 119 (2010) 286-297; Ransom-Painter, Journal of Dairy Science, 1997, vol. 80, 2237-2248; and EP 2 030 510). Especially high melting milk fat fractions have been used to inhibit bloom (Lohman and Hartel JAOCS vol 71, no 3 (1994) 267-276; Pajin and Jovanovic, Eur. Food Res. Technol., 2005, vol. 220, 389-394; and Hartel, Journal of the Americal Oil Chemists Society, vol. 73, no 8 (1996) 945-953). The use of milk fat or high melting milk fat fraction was directed to inhibit bloom on plain chocolate. Nothing is said in these studies about migration bloom and all tests were carried out on plain chocolates that were not filled.

In a publication of Bystrom and Hartel in LWT - Food Science and Technology, 1994, vol. 27, 142-150, the use of milk fat fractions in chocolate confectionery was examined.

In Manufacturing Confectioner, 1997, vol. 77, 79-84, Kaylegian describes high-melting milk fat fractions for coating chocolate to obtain antibloom properties.

In Confectionery Production, 2010, vol. 76, 18-19, Talbot also discusses filled chocolates and bloom and bloom migration. He discloses that at higher levels of milk fat (7.5%) both the growth of surface crystals as well as the solidification of amorphous cones is inhibited. No milk fat fractions are disclosed therein.

In addition, Ziegleder et al., in Süsswarentechnik, 2008, vol. 53, 12-14 present an overview of the influence of milk fat on pralines. The publication shows and concludes that milk fat in chocolate for filled chocolate behaves differently and that milk fat thus increases the bloom development. This publication does not disclose milk fat fractions.

De Graef et al. (Eur. J. Lipid Sci. Technology 107 (2005) 297-306) used butter oil in the chocolate to see the effect on migration bloom. Addition of 6% butter oil promoted fat bloom development while no significant difference was detected between chocolate with no added butter oil and 3% added butter oil.

It has been tried to prevent or reduce migration bloom by applying a techno-functional barrier in pralines (Nöbel et al. Food Research International 42 (2009) 69-75). The drawback of this is that an additional layer has to be applied and that it requires special equipment and/or treatment.

No satisfactory solution that prevents or reduces migration bloom in filled chocolates is known. It is therefore an object of the invention to provide a chocolate composition that shows less bloom. It is also an object of the invention to provide a chocolate composition that show less migration bloom. It is further an object of the invention to provide a chocolate composition that is suitable for coating fat containing products, such pralines or biscuits, cookies or other fat containing products that can be coated with chocolate.

The present invention provides a solution for at least one of the above mentioned objects. The inventors found that milk fat fractions that have a solid fat content at 30°C (SFC30) of less than 30% provide a chocolate composition with less bloom. In the prior art, it was generally believed that especially the higher melting fat fraction would beneficially influence the blooming of chocolate. In contrast, the present invention shows that lower melting fractions prevent or reduce bloom and are especially effective in inhibiting or reducing migration bloom.

Therefore the present invention provides a chocolate composition comprising a milk fat fraction wherein the milk fat fraction has a solid fat content at 30°C (SFC30) of less than 30%.

### Summary of invention

The present invention is directed to pralines or filled chocolates comprising a chocolate composition as coating, wherein the chocolate composition comprises a milk fat fraction wherein the milk fat fraction has a SFC30 of less than 30%. Preferably the milk fat fraction is obtained by means other than solvent fractionation. In a preferred embodiment of the present invention and/or embodiments thereof the milk fat fraction has a SFC10 of more than 0%, preferably more than 1%, preferably more than 2%, preferably more than 5%. In another preferred embodiment of the present invention and/or embodiments thereof the milk fat fraction has a SFC20 of less than 60%. It was found that migration bloom that occurs in filled chocolates such as pralines was greatly prevented or delayed in the chocolate coating when using the milk fat fraction of the present invention.

In a further aspect, the invention relates to a method to produce a praline or filled chocolate according to the invention wherein a filling is provided and a chocolate composition coating is provided, wherein the chocolate composition coating is prepared in a process comprising the steps of
a) preparing a chocolate mixture by mixing a chocolate mass and sugar;
b) optionally cocoa butter or other fat is added to make the fat percentage of the chocolate mixture from 5 to 50 wt%;
c) optionally adding other ingredients;
d) refining the chocolate mixture;
e) conching the chocolate mixture;
f) tempering the chocolate mixture;
wherein the milk fat fraction as defined in claims 1-9 may be added in step (a) and/or after refining step (d) or conching step (e).

For the context of the present application filled chocolates or pralines are chocolate pieces filled with a soft center. They are commonly known as "Belgian chocolates" or "chocolate bonbons". They nearly always contain a hard chocolate shell with a filling that has a different texture than the outer shell. The filling may be softer than the outer shell and may even be liquid. The filling can be butter, cream, liquor, nuts, marzipan, fruit, or even a different kind of chocolate such as ganache, and mixtures thereof. In a preferred embodiment the filling contains oil that is liquid at room temperature. Preferred oils in the filling are selected from the group consisting of nut oil, sunflower, soy oil, palm oil. In a preferred embodiment, the filling comprises sugar, preferably in an amount of 10-90%, more preferably from 20-80%m more preferably from 30-70%, more preferably from 40-60%. In a preferred embodiment the filling contains oil or fat, preferably in an amount of 10-80%, more preferably from 20-70%m more preferably from 30-60%, more preferably from 40-50%. In a preferred embodiment the filling comprises protein, preferable milk protein. In a preferred embodiment the filing comprises milk ingredients selected from the group of milk powder, milk, cream, butter, butter oil, skimmed milk powder, butter milk, butter milk powder, crème fraiche, sour cream. In a preferred embodiment the filling comprises 1-99% of a milk ingredient, more preferably 2-90%, more preferably 5-80%, more preferably 7-70%, more preferably from 10-60%, more preferably from 15-50%, more preferably from 20-45%, more preferably from 25-40%, and more preferably from 30-35%.

For the purpose of the present invention filled chocolates or pralines may be used interchangeably and indicate a harder chocolate shell with a filling having a different texture than the shell, often a softer texture. Other products containing fat may suitably be covered by the chocolate composition of the present invention. Biscuits, cookies and other fat containing products are very suitable to be covered by the chocolate composition of the present invention and/or embodiments thereof.

In yet another preferred embodiment of the present invention and/or embodiments thereof the milk fat fraction has a SFC30 of less than 25%, preferably of less than 20% preferably of less than 10%, preferably of less than 5%.

Furthermore in another embodiment of the present invention and/or embodiments thereof the milk fat fraction has a SFC20 of less than 55%, preferably of less than 50%, preferably of less than 45%.

In another embodiment of the present invention and/or embodiments thereof the milk fat fraction has a SFC20 of less than 47%. Moreover, in another embodiment of the present invention and/or embodiments thereof the milk fat fraction has a SFC40 of less than 5%, preferably a SFC35 of less than 5%.

Even more, in another embodiment of the present invention and/or embodiments thereof the milk fat fraction has a SFC20 of more than 10%.

The chocolate composition according to present invention and/or embodiments thereof may comprise up to 5 wt% of milk fat fractions, preferably 0.5-5wt% milk fat fraction, more preferably 1-4 wt% milk fat fraction, more preferably 1.5-3.5wt% and most preferably 2-3 wt% milk fat fraction based on total weight of the chocolate. On the basis of the fat phase, the chocolate composition comprises up to 18 wt% milk fat fraction, preferably from 1 to 18 wt%, more preferably from 3 to 15 wt% milk fat fraction, more preferably from 5-12wt% milk fat fraction, and most preferably from 7 to 10 wt% milk fat fraction.

The chocolate composition according to the invention and/or embodiments thereof may comprise a fat phase in an amount of 5 to 50 wt%, preferably in an amount of 10 to 40 wt%, more preferably in an amount of 15 to 35 wt%, and most preferably in an amount of 20-30 wt% based on total weight of the chocolate composition. Preferably the majority of the fat phase of the chocolate composition of the present invention and/or embodiments thereof comprises cocoa butter. It was found that a relative small amount of up to 18 wt% of the fat phase, or up to 5 wt% of the total weight of the chocolate composition of milk fat fraction significantly delays or stops fat bloom and especially migration bloom.

The present invention and/or embodiments thereof is based on the use of a milk fat fraction as described herein according to the invention to inhibit bloom, especially migration bloom.

Further, the use of the chocolate composition as a layer in filled chocolates is described. It was found that the milk fat fractions work very well against bloom formation in filled chocolates. The composition of the present will therefore be very suitable for either a coating of an oil containing filling, or as a layer between an oil containing filling and another chocolate coating.

Further described is a method to produce a chocolate composition for use in the praline or filled chocolate, said method comprising the steps of
a) preparing a chocolate mixture by mixing a chocolate mass and sugar
b) optionally adding cocoa butter or other fat to make the fat percentage of the chocolate mixture from 5 to 50 wt% based on total weight of the chocolate composition
c) optionally other ingredients are added
d) refining the chocolate mixture
e) conching the chocolate mixture
f) tempering the chocolate mixture
wherein the milk fat fractions according to the invention may be added in step (a) and/or after refining step (d) or conching step (e).

### Description of figures:

Fig. 1: Visual fat bloom for pralines for 8 weeks at 20°C.
Fig 2: Visual fat bloom for pralines for 8 weeks at 23°C.
Fig 3.: Visual fat bloom: disk on filling 8 weeks at 20°C.
Fig. 4: Visual fat bloom: disk on filling 8 weeks at 23°C.

### Detailed description

The present invention is directed to pralines or filled chocolates comprising a chocolate composition as coating comprising a milk fat fraction wherein the milk fat fraction has a SFC30 of less than 30%. Under milk fat it is understood a fat mixture originating from milk, which is generally a mixture of triglycerides of a large variety of fatty acids. In the context of the invention the terms "oil" and "fat" are used interchangeably. Any suitable source of milk fat can be used, such as cream, butter or anhydrous milk fat. Under milk fat also fractions thereof are understood. Milk fat fractions can be obtained by fat fractionation techniques known to a person skilled in the art, for example, by fractionation based on crystallisation. However, other fat fractionation techniques such as supercritical CO₂ extraction, fractionation with solvent, short-path distillation and dry fractionation, vacuum filtration, centrifugation and the use of a membrane press are also suitable. Most preferred are fractionation techniques that do not involve the use of solvents, and particularly do not involve organic solvents and or surface active agents. Preferred fractionation techniques may be selected from the group comprising, supercritical CO₂ extraction, short path distillation, dry fractionation, vacuum filtration, centrifugation and the use of a membrane press. Milk fat fractions in the present invention can be obtained by single or multi-step fractionation of milk fat. Preferably, anhydrous milk fat is used to obtain the milk fat fractions.

Fractionation by crystallisation is based on partial crystallisation of triglycerides with a high melting point brought about by controlled slow cooling under mild stirring and then on their separation from the remaining liquid fats by filtration or centrifugation. The solid phase formed by the crystals is called stearin fraction and the remaining liquid phase is called the olein fraction. The operation may be repeated in multiple ways on oleins and/or stearins obtained by new melting and cooling at different temperatures.

These successive operations performed on the fat fractions obtained in the previous steps are called multi-step fractionations. For example from a first olein fraction a second olein and stearin fraction are obtained, being denoted as olein-olein (OO) or olein-stearin (OS) respectively. These multi-step fractions may again be fractioned. For example the OS fraction is further fractionated into a olein fraction (OSO) and a stearin fraction (OSS). In general the order of fractionating is indicated, e.g. SO is the olein fraction of a stearin fraction. Typical main melting points of three olein fractions as measured by DSC are given in Table 1 below.

**Table 1**

| Olein fractions | Main melting peak | |
|---|---|---|
| | region, °C | typical value, °C |
| First olein (O) | 15-20 | 17 |
| Second olein (OO) | 10-15 | 11 |
| Third olein (OOO) | 5-10 | 7 |

Under the melting point of a milk fat fraction it is understood the main melting peak as determined by DSC.

The present invention is directed to pralines or filled chocolates comprising a chocolate composition as coating, wherein the chocolate composition comprises a milk fat fraction having a SFC30 of less than 30%. Solid fat content (SFC) is a measure of the percentage of fat in crystalline (solid) phase to total fat (the remainder being in liquid phase). It is usually indicated by a temperature, e.g. SFC30 is the solid fat content at 30°C. It is followed by the percentage of crystalline/solid fat, thus SFC30= 30 means that at 30°C the fat consist of 30 wt% solid fat. The SFC may be measured by NMR by standardised methods:
- AOCS Cd 16b-93 revised in 2000; Direct Method
- AOCS Cd 16-81 revised in 2000, Indirect Method
- ISO 8292
- IUPAC 2.150

In the prior art, the solid fat amount of a fat may also be indicated by Solid fat index (SFI). The SFI of a fat is measured using a dilatometer that measures the expansion of a fat as it is heated; density measurements are taken at a series of standardized temperature check points. The resulting SFI/temperature curve is related to melting qualities and flavor. It should be noted that SFC and SFI do not results in the same solid fat measures and cannot be used interchangeably. The milk fat fractions of the present invention are indicated in solid fat content (SFC) and not solid fat index (SFI).

Preferably the milk fat fraction is obtained by means other than solvent fractionation. In a preferred embodiment of the present invention and/or embodiments thereof the milk fat fraction has a SFC10 of more than 0%, preferably more than 0.5%, more preferably more than 1%, preferably more than 2%, preferably more than 5%. In another preferred embodiment of the present invention and/or embodiments thereof the milk fat fraction has a SFC20 of less than 60%. The chocolate composition of the present invention and/or embodiments thereof are very suitable to be used for chocolate coating, especially for soft fillings and in particular with fillings with a high oil content. It was found that migration bloom that occurs in filled chocolates such as pralines was greatly prevented or delayed in the chocolate coating when using the milk fat fraction of the present invention.

In yet another preferred embodiment of the present invention and/or embodiments thereof the milk fat fraction has a SFC30 of less than 25%, preferably of less than 20%, preferably less than 15%, preferably of less than 10%, preferably of less than 5%.

Furthermore in another embodiment of the present invention and/or embodiments thereof the milk fat fraction has a SFC20 of less than 60%, preferably less than 55%, preferably of less than 50%, preferably of less than 45%.

In another embodiment of the present invention and/or embodiments thereof the milk fat fraction has a SFC20 of less than 47%. Moreover, in another embodiment of the present invention and/or embodiments thereof the milk fat fraction has a SFC40 of less than 5%, preferably a SFC35 of less than 5%.

Even more, in another embodiment of the present invention and/or embodiments thereof the milk fat fraction has a SFC20 of more than 10%, preferably more than 12%, more preferably more than 15%.

In another embodiment of the present invention and/or embodiments thereof the milk fat fraction is an olein fraction. Preferably an olein fraction obtained at a temperature of 15 to 20 °C. The olein fraction may be fractionated further to provide a second olein (OO) fraction or even the stearin fraction of the olein fraction (OS). The fractions of the olein fraction may be fractionated further, e.g. to provide a third olein fraction (OOO), the stearin fraction of the second olein fraction (OOS), the olein fraction of the stearin fraction of the first olein fraction (OSO), or the stearin fraction of the stearin fraction of the first olein fraction (OSS). It is to be understood that the further fractions from the olein fraction are regarded as olein fractions.

In a preferred embodiment, the milk fat fraction has a SFC10 that is at least 0.5%, preferably at least 1%, more preferably at least 2% and most preferably at least 5%.

In another embodiment of the present invention and/or embodiments thereof the milk fat fraction has a SFC35 of less than 20%, more preferably less than 15%, preferably less than 10%, more preferably less than 8%, more preferably less than 5%, more preferably less than 3%, more preferably less than 1%. In a preferred embodiment the fraction is obtained without the use of solvent such as organic solvent. In a preferred embodiment and embodiments thereof the milk fat fraction has a SCF25 of less than 20%, more preferably less than 15%, more preferably less than 10%, more preferably less than 8%, more preferably less than 7%, more preferably less than 5%, more preferably less than 3%, more preferably less than 2%, and more preferably less than 1%.

In another embodiment of the present invention and/or embodiments thereof the milk fat fraction has a SFC20 of at least 1%, more preferably at least 2%, more preferably at least 7%, more preferably at least 8%.

In another embodiment of the present invention and/or embodiments thereof the milk fat fraction has a SFC 15 of at least 1%, more preferably at least 5%, more preferably at least 16%, most preferably at least 28%.

In another embodiment of the present invention and/or embodiments thereof the milk fat fraction has a SFC10 of at least 17%, more preferably at least 41% and most preferably at least 45%.

In another embodiment of the present invention and/or embodiments thereof the milk fat fraction has a SFC10 less than 60%, more preferably less than 55%, more preferably less than 50%, more preferably less than 45, and most preferably less than 41%.

In another embodiment of the present invention and/or embodiments thereof the milk fat fraction has a SFC5 of at least 40% more preferably at least 55% and most preferably at least 60%.

In another embodiment of the present invention and/or embodiments thereof the milk fat fraction has a SFC5 of less than 75% more preferably less than 70% more preferably less than 75%, and most preferably less than 61%.

In another embodiment of the present invention and/or embodiments thereof the milk fat fraction has a SFC20 of at least 10%. In another embodiment of the present invention and/or embodiments thereof the milk fat fraction has a SFC10 of at least 5%, more preferably at least 20%.

In another embodiment of the present invention and/or embodiments thereof the milk fat fraction has SFC15 of at least 20%, more preferably at least 30%.

European regulations regarding chocolate (EU directive 2000/36/EC) mandate that in order to be labeled chocolate the fat content of the cocoa product comprises at least 95-100% cocoa butter and dairy fat. US regulation do not allow other vegetable fat than cocoa butter to be included in chocolate compositions. Compound coating is also known as compound chocolate and is a non-chocolate product replacement that may include vegetable fat and is often made from a combination of cocoa, vegetable fat, and sweeteners. Vegetable fat in compound coating may include, coconut oil, palm, palm kernel oil, canola, sunflower, safflour and/or fractions and/or esterifications thereof. It is to be understood that the chocolate composition of the present invention includes chocolates that are allowed to be labeled chocolate according the national regulations. However also chocolate compositions that are not allowed to be labeled chocolate are expressly comprised in the present invention. A chocolate composition according to the present invention is a composition that comprises cocoa solids.

In a preferred embodiment of the present invention, chocolate compositions comprise at least 2 wt% total dry cocoa solids up to 100%, more preferably in an amount of 15-90%, more preferably in an amount of 20-80% cocoa solids, more preferably in an amount of 25-70%, more preferably in an amount of 30-60%, more preferably in an amount of 30-60% cocoa solids, more preferably in an amount of 35-50% cocoa solids, and more preferably in an amount of 40-45% cocoa solids. The chocolate composition may further comprise sugar or other sweetening matter including artificial sweeteners, and/or protein. Chocolate compositions may comprise milk or milk derived ingredients, such as milk powder, preferably in an amount of 0-40 wt%. In a preferred embodiment chocolate compositions may comprise sugar or other sweetening matters and/or low calorie sugar replacers, preferably in an amount of 0-80 wt%, more preferably in an amount of 10-70%, more preferably in an amount of 20-60%, more preferably in an amount of 25-55%, more preferably in an amount of 30-50%, more preferably in an amount of 35-45%. In a preferred embodiment, the chocolate composition, comprises at least 43 wt% total dry cocoa solids, and preferably at least 26 wt% cocoa butter. In another preferred embodiment the chocolate composition comprises at least 30 wt % total dry cocoa solids and preferably comprises at least 18 wt% dry milk solids, preferably including not less than 4 wt% milk fat. In another preferred embodiment, the chocolate composition comprises preferably at least 16wt % of dry non-fat cocoa solids.

White chocolate preferably comprises, cocoa butter, milk or milk products and sugars and preferably comprises at least 20 wt% cocoa butter, preferably at least 14 wt% dry milk solids and preferably at least 3.5 % is milk fat and/or milk fat fractions. The chocolate composition or chocolate coating according to present invention and/or embodiments thereof may comprise up to 5 wt% of milk fat fractions, preferably 0.5-5 wt% milk fat fraction, more preferably 1-4 wt% milk fat fraction, more preferably 1.5-3.5 wt% most preferably 2-3 wt% milk fat fraction based on total weight of the chocolate. On the basis of the fat phase, the chocolate composition or chocolate coating comprises up to 18 wt% milk fat fraction, preferably from 1 to 18 wt%, more preferably from 3 to 15 wt% milk fat fraction, more preferably from 5 to 2 wt% milk fat fraction and most preferably from 7 to 10 wt% milk fat fraction based on the fat phase of the chocolate composition. The chocolate composition according to the invention and/or embodiments thereof may comprise a fat phase in an amount of 5 to 50 wt%, more preferably in an amount of 10 to 40 wt%, more preferably in an amount of 15 to 35 wt% and most preferably in an amount of 20 to 30 wt%. Preferably the majority of the fat phase of the chocolate composition or chocolate coating of the present invention and/or embodiments thereof comprises of cocoa butter. It was found that a relative small amount of up to 18 wt% of the fat phase, or up to 5 wt% of the total products of milk fat fraction significantly delays or stops fat bloom and especially migration bloom. In another preferred embodiment the chocolate composition according to the invention and/or embodiments thereof comprises cocoa butter preferably in an amount of 5-40 wt%, 10 to 35 wt%, most preferably in an amount of 20 to 35 wt% on total weight of the chocolate composition. Preferably the fat phase of the chocolate composition of the present invention and/or embodiments thereof comprises mostly cocoa butter. In a preferred embodiment the fat phase of the chocolate composition of the present invention and/or embodiments thereof contains only milk fat fraction and cocoa butter. Preferably, the amount of cocoa butter in the fat phase is at least 20 wt%, more preferably at least 50 wt%, more preferably at least 60 wt%, more preferably at least 70 wt%, more preferably at least 80 wt%, more preferably at least 82 wt%, more preferably at least 86 wt%, more preferably at least 90 wt%, more preferably at least 93 wt%, more preferably at least 95 wt% more preferably at least 97 % and most preferably at least 99 wt% on fat phase. However in an another embodiment the chocolate composition of the invention and embodiments thereof the fat phase may comprise other fats than milk fat fraction and cocoa butter, such as cocoa butter equivalent, cocoa butter alternatives, cocoa butter replacers, cocoa butter improver, and cocoa butter substitutes. Suitable fats for the fat phase of the chocolate composition and chocolate coating of the present invention are shea fat, illipe fat, sal fat, kokum gurgi fat, mango kernel fat, and fractions thereof, fractionated vegetable fats, palm mid fractions, fractionated lauric oils, palm kernel fractions, hydrogenated vegetable fats, interesterified vegetable fats, interesterified, hydrogenated, solid fraction of tea seed oil. Suitable amounts of these other fats are 0.5 wt%, 1 wt%, 2 wt%, 3 wt%, 4 wt%, 5 wt%, 7 wt%, 8 wt%, 9 wt%, 11 wt%, 12 wt%, 13 wt%, 16 wt%, 20 wt%, 22 wt%, 23 wt%, 26 wt%, 30 wt%, and/or 37 wt% based on fat phase. Preferably the amount of other fats or oils is less than 10 wt%, more preferably less than 5 wt%, more preferably less than 3 wt% and most preferably less than 2 wt% on total weight of chocolate composition. In a preferred embodiment of the invention and/or embodiments thereof, the chocolate composition is not a compound composition. In another preferred embodiment of the invention and/or embodiments thereof, the fat phase of the chocolate composition does not comprise palm kernel oil. In a preferred embodiment of the invention and/or embodiments thereof, the amount of palm kernel oil is less than 30 wt% on total weight of the chocolate composition, preferably less than 25 wt%, preferably less than 20 wt%, more preferably less than 15 wt%, more preferably less than 10 wt%, more preferably less than 8 wt%, more preferably less than 5 wt%, more preferably less than 4 wt%, more preferably less than 2 wt%, and more preferably less than 1 wt%.

Preferably at least 10 wt% of sweetening matter is present in the chocolate composition. Sweetening matter may be sugar, such as simple sugars (monosaccharides) such as glucose, fructose, and galactose, or disaccharides such as sucrose, maltose and lactose. Sweetening matter may also include sugar substitutes such as stevia, steviol glycosides, aspartame, sucralose, acesulfame potassium, aspartame-acesulfame salt, saccharin, sorbitol, xylitol, cyclamate, brazzein, curculin, erythritol, glycyrrhizin, glycerol, hydrogenated starch hydrolysates, isomalt, lactitol, mogroside, mabinlin, maltitol, mannitol, miraculin, monatin, monelin, osladin, pentadin, tagatose, thaumatin, alitame, dulcin, glucin, neohesperidin dihydrochalcone, neotame, advantame, P-4000 and/or combinations thereof. Also envisioned are combinations of sugar and sugar substitutes. In a preferred embodiment, at least 12 wt% sweetening matter is present in the chocolate composition, more preferably at least 15 wt%, more preferably at least 20 wt%, more preferably at least 22 wt%, more preferably at least 25 wt%, more preferably at least 30 wt%, more preferably at least 35 wt%, more preferably at least 40 wt%, more preferably at least 45 wt%, more preferably at least 50 wt%, more preferably ate least 55 wt%, more preferably at least 60 wt%. In a preferred embodiment of the present invention and embodiments thereof, the sweetening matter is sugar, and/or a mix of sugar with sugar substitutes.

It is to be understood that some sweetening materials have a high sweetness index, while others have a lower sweetness index. A skilled person will understand that a sweetening material with high sweetness index may be used in a lower amount than sweetening materials with lower sweetness index. In another preferred embodiment, the chocolate composition according to the invention and/or embodiments thereof comprises sugar and/or sweetening matter preferably in an amount of 20 to 90 wt%, more preferably in an amount of 30 to 80 wt%, more preferably in an amount of 35 to 70 wt% and more preferably in an amount of 40 to 60 wt%, and more preferably in an amount of 45-45 wt% based on total weight of the chocolate.

In another preferred embodiment the chocolate composition according to the invention and/or embodiments thereof comprises milk or milk powder, preferably in an amount of 0 to 50 wt%, preferably 1 to 40 wt%, more preferably 2 to 35 wt%, more preferably 3-30 wt%, more preferably 5-25 wt% and more preferably 10-22 wt%, and more preferably from 15-20 wt%.

In another preferred embodiment the chocolate composition according to the invention and/or embodiments thereof comprises dry fat free cocoa solids preferably in an amount of 2.5 to 45 wt%, more preferably in an amount of 5 to 40 wt%, more preferably in an amount of 10-35 wt%, more preferably in an amount of 15 to 30 wt%, more preferably in an amount of 20 to 25 wt%. Dry fat free cocoa solids are the solid fraction of chocolate mass or liquor which remains when the cocoa butter has been removed.

In another preferred embodiment the chocolate composition according to the invention and/or embodiments thereof comprises other ingredients selected from the group comprising emulsifiers such as lecithin from soy, sunflower, or rapeseed, AMP, mono- and diglycerides and their lactic acid esters and citric acid ester (citrem), PGPR, sucrose esters of fatty acids, STS, aromas or flavors such as vanilla, vanillin, herbs, and/or other ingredients such as nuts, raisins, and/or fruit.

The chocolate composition according to the invention and/or embodiments thereof is very suitably for use as the coating of filled chocolates or pralines. Filled chocolates and pralines usually consist of a harder outer chocolate coating and a filling that has a different texture than the shell. The chocolate composition according to the invention and/or embodiments thereof are used as this harder outer chocolate coating.

The present invention and/or embodiments thereof are related to pralines or filled chocolate comprising a chocolate composition as coating. It was found that the chocolate composition of the present invention and/or embodiments thereof is very suitable for coating of pralines or filled chocolates. The filling may be softer than the outer shell and may even be liquid. The filling can be butter, cream, liquor, nuts, marzipan, fruit, or even a different kind of chocolate such as ganache, and mixtures thereof. In a preferred embodiment the filling contains oil that is liquid at room temperature. Preferred oils in the filling are selected from the group consisting of nut oil, sunflower, soy oil, palm oil. In a preferred embodiment, the filling comprises sugar, preferably in an amount of 10-90%, more preferably from 20-80%m more preferably from 30-70%, more preferably from 40-60%. In a preferred embodiment the filling contains oil or fat, preferably in an amount of 10-80%, more preferably from 20-70%m more preferably from 30-60%, more preferably from 40-50%. In a preferred embodiment the filling comprises protein, preferable milk protein. In a preferred embodiment the filing comprises milk ingredients selected from the group of milk powder, milk, cream, butter, butter oil, skimmed milk powder, butter milk, butter milk powder, crème fraiche, sour cream. In a preferred embodiment the filling comprises 1-99% of a milk ingredient, more preferably 2-90%, more preferably 5-80%, more preferably 7-70%, more preferably from 10-60%, more preferably from 15-50%, more preferably from 20-45%, more preferably from 25-40%, and more preferably from 30-35%.

The present invention and/or embodiments thereof is further related to a method to produce a praline or filled chocolate according to the present invention wherein a filling is provided and a chocolate composition coating is provided, wherein the chocolate composition coating is prepared in a process comprising the steps of
a) preparing a chocolate mixture by mixing chocolate mass and sugar and/or sweetening matter
b) optionally adding cocoa butter or other fat to make the fat percentage of the chocolate mixture from 5 to 50 wt% based on total weight of the chocolate composition
c) optionally other ingredients are added
d) refining the chocolate mixture
e) conching the chocolate mixture
f) tempering the chocolate mixture
wherein the a milk fat fractions of the present invention may be added in step (a) and/or after refining step (d) or conching step (e).

The first step in the method of the present invention is mixing a milk fat fraction with chocolate mass and sugar and/or sweetening matter. The milk fat fraction is as defined above.

Preferably the milk fat fraction is obtained by means other than solvent fractionation. In a preferred embodiment of the method of the present invention and/or embodiments thereof the milk fat fraction has a SFC10 of more than 0%, preferably more than 0.5%, more preferably more than 1%, preferably more than 2%, preferably more than 5%. In another preferred embodiment of the present invention and/or embodiments thereof the milk fat fraction has a SFC20 of less than 60%.

In yet another preferred embodiment of the method of the present invention and/or embodiments thereof the milk fat fraction has a SFC30 of less than 25%, preferably of less than 20%, preferably less than 15%, preferably of less than 10%, preferably of less than 5%.

Furthermore in another embodiment of the method of the present invention and/or embodiments thereof the milk fat fraction has a SFC20 of less than 60%, preferably less than 55%, preferably of less than 50%, preferably of less than 45%.

In another embodiment of the method of the present invention and/or embodiments thereof the milk fat fraction has a SFC20 of less than 47%. Moreover, in another embodiment of the method of the present invention and/or embodiments thereof the milk fat fraction has a SFC40 of less than 5%, preferably a SFC35 of less than 5%.

Even more, in another embodiment of the method of the present invention and/or embodiments thereof the milk fat fraction has a SFC20 of more than 10%, preferably more than 12, more preferably more than 15%.

In another embodiment of the method of the present invention and/or embodiments thereof the milk fat fraction is an olein fraction. Preferably an olein fraction obtained at a temperature of 15 to 20 °C. The olein fraction may be fractionated further to provide a second olein (OO) fraction or even the stearin fraction of the olein fraction (OS). The fractions of the olein fraction may be fractionated further, e.g. to provide a third olein fraction (OOO), the stearin fraction of the second olein fraction (OOS), the olein fraction of the stearin fraction of the first olein fraction (OSO), or the stearin fraction of the stearin fraction of the first olein fraction (OSS). It is to be understood that the further fractions from the olein fraction are regarded as olein fractions.

In a preferred embodiment of the method of the present invention and/or embodiments thereof the milk fat fraction has a SFC10 that is at least 0.5%, preferably at least 1%, more preferably at least 2% and most preferably at least 5%.

In another embodiment of the method of the present invention and/or embodiments thereof the milk fat fraction has a SFC35 of less than 20%, more preferably less than 15%, preferably less than 10%, more preferably less then 8%, more preferably less than 5%, more preferably less than 3%, more preferably less than 1%.. In a preferred embodiment the fraction is obtained without the use of solvent such as organic solvent. In a preferred embodiment of the method of the present invention and/or embodiments thereof the milk fat fraction has a SCF25 of less than 20%, more preferably less than 15%, more preferably less than 10%, more preferably less than 8%, more preferably less than 7%, more preferably less than 5%, more preferably less than 3%, more preferably less than 2%, and more preferably less than 1%.

In another embodiment of the method of the present invention and/or embodiments thereof the milk fat fraction has a SFC20 of at least 1%, more preferably at least 2%, more preferably at least 7%, and most preferably at least 8%. In another embodiment of the method of the present invention and/or embodiments thereof the milk fat fraction has a SFC20 of more than 5%, more preferably more than 10%, more preferably more than 15%, more preferably more than 40%.

In another embodiment of the method of the present invention and/or embodiments thereof the milk fat fraction has a SFC 15 of at least 1%, more preferably at least 5%, more preferably at least 16%, most preferably at least 28%.

In another embodiment of the method of the present invention and/or embodiments thereof the milk fat fraction has a SFC10 of at least 17%, more preferably at least 41% and most preferably at least 45%.

In another embodiment of the present invention and/or embodiments thereof the milk fat fraction has a SFC10 less than 60%, more preferably less than 55%, more preferably less than 50%, more preferably less than 45, and most preferably less than 41%.

In another embodiment of the method of the present invention and/or embodiments thereof the milk fat fraction has a SFC5 of at least 40% more preferably at least 55% and most preferably at least 60%.

In another embodiment of the present invention and/or embodiments thereof the milk fat fraction has a SFC5 of less than 75% more preferably less than 70% more preferably less than 75%, and most preferably less than 61%.

In another embodiment of the method of the present invention and/or embodiments thereof the milk fat fraction has a SFC20 of at least 10%. In another embodiment of the method of the present invention and/or embodiments thereof the milk fat fraction has a SFC10 of at least 5%, more preferably at least 20%.

In another embodiment of the method of the present invention and/or embodiments thereof the milk fat fraction has SFC15 of at least 20%, more preferably at least 30%.

In one step of the method of the invention and/or embodiments thereof sugar is mixed with a milk fat fraction and chocolate mass. Chocolate mass is made from fermented cocoa beans that are then dried, cleaned, and roasted after the fermentation. After the shell is removed from roasted fermented cocoa beans the resulting cacao nibs are then ground to cocoa mass. For the purpose of the present invention, chocolate mass also comprises chocolate liquor, which is liquefied chocolate mass.

The method of the invention comprises the step of mixing sugar with a chocolate mass. In a preferred embodiment sugar in an amount of 30 to 80 wt%, more preferably in an amount of 35 to 70 wt%, more preferably in an amount of 40 to 60 wt% and most preferably in an amount of 45 to 55 wt% is mixed with the chocolate mass. The amount of sugar is on total weight of the chocolate composition.

In a preferred embodiment of the method of the present invention and/or embodiments thereof, a chocolate composition coating is produced having up to 5 wt% of milk fat fractions, preferably 0.5-5wt% milk fat fraction, more preferably 1-4 wt% milk fat fraction, more preferably 1.5-3.5wt%, and most preferably 2-3 wt% milk fat fraction based on total weight of the chocolate composition may be mixed with a chocolate mass and sugar. On the basis of the fat phase of the final chocolate composition coating, up to 18 wt% milk fat fraction, preferably from 1 to 18 wt%, more preferably from 3 to 15 wt% milk fat fraction, more preferably from 5 to 12 wt% milk fat fraction, and most preferably from 7 to 10 wt% milk fat fraction may be mixed with the chocolate mass and sugar.

In another preferred embodiment of the method of the invention and/or embodiments thereof, a chocolate composition coating is produced having a fat phase in an amount of 5 to 50 wt%, more preferably in an amount of 10 to 40 wt%, most preferably in an amount of 15 to 30 wt% based on total weight of the chocolate composition coating. Preferably the majority of the fat phase of the method of the present invention and/or embodiments thereof consists of cocoa butter. It was found that a relative small amount of milk fat fraction of up to 18 wt% of the fat phase, or up to 5 wt% of the total weight of the chocolate composition coating significantly delays or stops fat bloom and especially migration bloom.

Yet another embodiment of the invention is directed to a method to produce a praline or filled chocolate according to the invention comprising a chocolate composition coating comprising cocoa butter preferably in an amount of 5-40 wt%, 10 to 35 wt%, most preferably in an amount of 15 to 30 wt% on total weight of the chocolate composition. Preferably the method of the present invention and/or embodiments thereof produces a chocolate composition coating wherein the fat phase comprises mostly cocoa butter. In a preferred embodiment the method of the present invention contains only milk fat fraction and cocoa butter in the fat phase. Preferably, the amount of cocoa butter in the fat phase is at least 20 wt%, more preferably at least 50wt%, more preferably at least 60wt%, more preferably at least 70wt%, more preferably at least 80wt%, more preferably at least 82wt%, more preferably at least 86wt%, more preferably at least 90wt%, more preferably at least 93wt%, more preferably at least 95wt% more preferably at least 97wt% and most preferably at least 99wt% on fat phase. However in an another embodiment of the method of the present invention and/or embodiments thereof, the fat phase may comprise other fats than milk fat fraction and cocoa butter, such as cocoa butter equivalent, cocoa butter alternatives, cocoa butter replacers, cocoa butter improver. Suitable other fats for the fat phase of the method of the present invention are shea fat, illipe fat, sal fat, kokum gurgi fat, mango kernel fat, and fractions thereof, fractionated vegetable fats, palm mid fractions, fractionated lauric oils, palm kernel fractions, hydrogenated vegetable fats, interesterified vegetable fats, interesterified, hydrogenated, solid fraction of tea seed oil. Suitable amounts of these other fats are 0.5 wt%, 1wt%, 2 wt%, 3, wt%, 4 wt%, 5 wt%, 7 wt%, 8 wt%, 9 wt%, 11 wt%, 12 wt%, 13 wt%, 16 wt%, 20 wt%, 22 wt%, 23 wt%, 26 wt%, 30 wt%, and/or 37 wt% based on fat phase. Preferably the amount of other fats or oils is less than 10 wt%, more preferably less than 5wt%, more preferably less than 3wt% and most preferably less than 2wt% on total weight of chocolate composition.

In a preferred embodiment of the invention and/or embodiments thereof, the chocolate composition is not a compound composition. In another preferred embodiment of the invention and/or embodiments thereof, the fat phase of the chocolate compsotion does not comprise palm kernel oil. preferred embodiment of the invention and/or embodiments thereof, the amount of palm kernel oil is less than 30 wt% on total weight of chocolate composition, preferably less than 25 wt%, preferably less than 20 wt%, more preferably less than 15 wt%, more preferably less than 10 wt%, more preferably less than 8 wt%, more preferably less than 5 wt%, more preferably less than 4 wt%, more preferably less than 2 wt%, and more preferably less than 1 wt%.

In another preferred embodiment of the method of the present invention and/or embodiments thereof, milk or milk powder may be added, preferably in an amount of 0 to 50 wt%, preferably 1 to 40 wt%, more preferably 2 to 35 wt%, more preferably 3-39wt%, more preferably 5-25wt% and preferably 10-22 wt%, and more preferably 15-20wt% based on total weight of the chocolate composition.

In another preferred embodiment the chocolate composition according to the invention and/or embodiments thereof comprises dry fat free cocoa solids preferably in an amount of 2.5 to 45 wt%, more preferably in an amount of 5 to 40 wt%, more preferably in an amount of 10-35 wt%, more preferably in an amount of 15 to 32 wt%, more preferably in an amount of 20 to 30 wt%, more preferably in an amount of 25-27wt%. Dry fat free cocoa solids are the solid fraction of chocolate mass or liquor which remains when the cocoa butter has been removed.

In another preferred embodiment of the method of the present invention and/or embodiments thereof other ingredients selected from the group comprising emulsifiers such as lecithin from soy, sunflower, or rapeseed, AMP, mono- and diglycerides and their lactic acid esters and citric acid ester (citrem), PGPR, STS, sucrose esters of fatty acids , aromas or flavors such as vanilla, vanillin, herbs, and/or other ingredients such as nuts, raisins, and/or fruit may be added.

Refining reduces the size of the chocolate solids and sugar crystals. Refining the chocolate can be done with a grinder, a ball miller refiner or other types of equipment.

Conching is the process of distributing the fat phase evenly within the chocolate, and adjusting the particles making them even more evenly shaped. It is an important process that also promotes flavor development. Conching may last up to 78 hours for high quality chocolate with a mild, rich taste. Lower quality chocolate may be conched for as little as 6 hours. Conching is important to the final texture and flavor of chocolate. During conching the chocolate mixture is mixed, agitated and aerated. Conching and refining of the chocolate may be done simultaneously by a grinder.

Tempering is the process of controlled crystallization of the fat phase. Cocoa butter can crystallize into six different polymorphic forms. The primary purpose of tempering is to assure that only the preferred polymorph, type V, is formed so that the chocolate is glossy, firm, has a good snap, and melts near body temperature. The other polymorphs of cocoa butter render the chocolate, soft, crumbly and/or too easy to melt. Generally, dark chocolate is first heated to around 45 °C to melt all six forms of crystals. Next, the chocolate is cooled to about 27 °C , which will allow crystal types IV and V to form. At this temperature, the chocolate is agitated to create many small crystal "seeds" which will serve as nuclei to create small crystals in the chocolate. The chocolate is then heated to about 31 °C to eliminate any type IV crystals, leaving just type V. After this point, any excessive heating of the chocolate will destroy the temper and this process will have to be repeated. For milk chocolate in general lower tempering temperatures are generally applied. There are other methods of chocolate tempering used. The most common variant is introducing already tempered, solid "seed" chocolate. The temper of chocolate can be measured with a chocolate temper meter to ensure accuracy and consistency. Two classic ways of manually tempering chocolate are:
- Working the molten chocolate on a heat-absorbing surface, such as a stone slab, until thickening indicates the presence of sufficient crystal "seeds"; the chocolate is then gently warmed to working temperature.
- Stirring solid chocolate into molten chocolate to "inoculate" the liquid chocolate with crystals (this method uses the already formed crystals of the solid chocolate to "seed" the molten chocolate).

Chocolate tempering machines (or temperers) with computer controls can be used for producing consistently tempered chocolate, particularly for large volume applications.

A skilled person will be able to adjust the refining, conching and tempering parameters according the chocolate composition and its intended use.

### Example

### General Method

### Measuring Solid fat content:

Determining the solid fat content of a fat sample at a certain temperature using pulse-NMR. Required Equipment: pulse-NMR spectrometer (Bruker Mini Spec mq 20), waterbath (0 °C, 10, 15, 18, 20, 25 en 30 °C (all ± 0.1 °C) (Temperatures can be adjusted dependent on the measurement range), calibrated thermometer (in 0.1 °C), Aluminum blocks, glass tubes, d = 10 mm Method

### Pre-treatment sample

Samples are melted in a water bath at a temperature of 85°C. When the samples are clear they are filtered in a folding filter with anhydrous sodium sulphate. After filtration the sample is reheated to 80°C.

Bruker Mini Spec MQ20 NMR equipment. The NMR device keeps switched on due to the time needed to warm up.

The sample tubes need to be placed dry and clean in the NMR as dirt can damage the measuring cell. Keep the white lid on the measuring opening after removal of the sample tube. The NMR needs a daily check every 24 hours. Make sure the sample is clean, homogeneous and without crystals. Otherwise heat up the sample. Fill 8 tubes with between 3,5 to 4 cm of sample and wipe off the tube on the outside with a tissue. Put all tubes in a waterbath of 0 °C during 60 min. Wipe off the tubes and place respectively: 2, 2, 1, 1, 1 en 1 tubes in the water baths of 10, 15, 18, 20, 25 en 30 °C during 60 min.

Measure de NMR value of the 8-tubes. Dry each tube prior to placing it in the NMR measuring cell. Measure each sample in duplicate. For the samples up to 18 °C 2 samples are required for a duplicate measurement. The tubes with temperatures of 18°C and higher are measured in duplicate on the same sample. Note each sample in the NMR book in two decimals and calculate the average.

### Example 1

Dark chocolates were prepared on a 4 kg batch scale with the following ingredients: pre-refined sugar, cocoa mass, cocoa butter, lecithin, and optionally one of the milk fat fractions. For each chocolate, two batches were sequentially produced to obtain 8 kg of final chocolate.

The composition of the reference chocolate is given in Table 2. This chocolate contains 33.5% fat:
- 33.1% cocoa butter (11.6% separately added and 21.5% as part of the cocoa mass);
- 0.4% lecithin.

**Table 2. Dark chocolate composition (reference).**

| **Ingredient** | **Weight (w/w) %** |
|---|---|
| Pre-refined Sugar | 48.0 |
| Cocoa mass | 40.0 |
| Cocoa butter | 11.6 |
| Lecithin | 0.4 |

Also dark chocolates with 3% milk fat fraction were produced. Compared to the composition of the reference dark chocolate, 3% of the added cocoa butter was substituted by an equivalent amount of milk fat fraction or AMF as reference. Anhydrous milk fat (AMF) is known to inhibit fat bloom. Table 3 gives the SFC of the milk fat fractions used. H1 and H2 are stearin fractions and relative hard, and outside the invention. S1 is an olein fraction, relative soft and according to the invention.

**Table 3 SFC of milk fat fractions used**

| **SFC** | **H1** | **H2** | **S1** |
|---|---|---|---|
| 5 | 80 | 75 | 82 |
| 10 | 72 | 66 | 74 |
| 15 | 63 | 55 | 62 |
| 20 | 52 | 46 | 40 |
| 30 | 42.5 | 32 | 0.25 |
| 35 | 31.5 | 21 | 0.2 |
| 40 | 17.5 | 7 | 0.2 |

The dark chocolates with milk fat fractions or AMF contain 33.5% fat:
- 30.1% cocoa butter (8.6% separately added and 21.5% as part of the cocoa mass);
- 3.0% milk fat fraction (either H1, H2, AMF, or S1)

This resulted in a composition as given in Table 4

**Table 4. Dark chocolate composition (chocolate with milk fat fraction).**

| **Ingredient** | **Weight (w/w) %** |
|---|---|
| Prerefined sugar | 48.0 |
| Cocoa mass | 40.0 |
| Cocoa butter | 8.6 |
| Milk fat fraction | 3.0 |
| Lecithin | 0.4 |

A first step in the chocolate production is mixing of the ingredients sugar, cocoa mass and (optionally) the milk fat fraction. Taking into account the fat percentage of the cocoa mass (53.77 wt%), an amount of cocoa butter was also added to the mixture, so as to obtain a fat percentage of 27 wt%. Mixing of the ingredients is performed for 20 min at elevated temperature (45°C). A second step is refining of the mixture, so as to reduce the size of the dispersed particles (sugar, cocoa) to acceptable values with respect to the desired sensorial aspects (absence of sandiness).
To this end, a three-roll refiner, operating at 35°C, was used.
A third step is conching, consisting of a dry conching and a wet conching phase. Total conching time is 390 min, of which 360 minutes dry conching and 30 minutes conching.
Firstly, the refined mixture is dry conched for 360 min. Upon the start of the conching phase, a small amount of cocoa butter (1 wt%) is added to counteract product agglomeration and climbing up of the product to the top of the conching bowl. Wet conching starts with the addition of the remainder of the cocoa butter and the lecithin.
A next step in chocolate production is tempering. The different chocolate samples were tempered in a Selmi One automatic tempering unit (max. capacity 10 kg). After mixing the two batches of each chocolate, 8 kg was loaded in the tempering unit and the temperature of the molten chocolate was set at 45°C. The tempered chocolate left the device at a temperature of approximately 30.5°C. Finally the tempered chocolate was transferred to moulds (disks or tablets) and was allowed to cool further in temperature and relative humidity controlled Chocolate World cooling cabinets.
After 60 min cooling, all chocolate tablets and disks showed good contraction and released easily from the moulds. The demoulded chocolates were kept at 15°C for an additional 60 min and were then stored at 20°C.

A filling rich in hazelnuts was prepared. The recipe of the hazelnut filling can be found in Table 5. As the fat content of the hazelnut paste was 68%, the fat content of the filling was found to be 50.4%.

**Table 5. Hazelnut filling composition.**

| **Ingredient** | **Weight (w/w) %** |
|---|---|
| Pre-refined sugar | 40.0 |
| Hazelnut paste | 30.0 |
| Palm oil | 30.0 |

A first step in the filling production is mixing of the ingredients hazelnut paste and sugar. Taking into account the fat percentage of the hazelnut paste, a mixture with 29,1 wt% fat is obtained. Mixing of the ingredients is performed for 20 min at elevated temperature (45°C). A second step is refining of the mixture. To this end, a three-roll refiner, operating at 35°C, was used. In order to obtain the desired particle size reduction.
Finally, the palm oil was added to the refined mixture and the whole was blended for 20 min, operating at 45°C. In total 6 batches of each time 5 kg of hazelnut filling were produced for use in the later migration fat bloom test setup. Through Karl-Fisher analysis, the moisture content of these fillings was determined and in all cases, a sufficiently low moisture content (between 0.3 and 0.45%) was found.

To evaluate migration fat bloom two composed filling-chocolate systems have been produced,
- Moulded filled chocolates, pralines (as a close simulation of a real product, chocolate shell thickness 1-1.5 mm)
- Chocolate disks in close contact with the hazelnut filling (model system with a reproducible thickness of 3 mm)
The procedure to obtain the model system (chocolate disks in contact with the hazelnut filling) can be summarized as follows:
- Filling of the petri dishes with 18g of hazelnut filling (T = 32°C);
- Cooling for 45 min at 11°C, followed by 15 min at 20°C;
- For each petri dish, two chocolate disks are placed in close contact with the filling.

The filled chocolates are produced in the following way:
- Use tempered chocolate to mould the chocolate shell (1 - 1.5 mm);
- Shell cooling: 30 min at 11°C followed by 15 min at 20°C;
- Dosing of the filling at 26°C;
- Cooling: 30 min at 11°C followed by 15 min at 20° C;
- Bottom moulding of the chocolate;
- Cooling of the closed chocolate: 2 hours at 11°C.

The produced chocolate systems (filled chocolates, petri dishes with chocolate disks in contact with the hazelnut filling, chocolate disks alone) are put in Lovibond thermostatic cabinets to control the temperature during long-term storage. Two storage protocols are used:
- Storage at 20°C during 24 weeks
- Storage at 23°C during 12 weeks

At the end of this storage period, but also at intermediate times, the chocolates were allowed to crystallize and were inspected for further analyses with SEM analysis of the chocolate surface morphology (high resolution imaging), to assess initial fat bloom crystal formation, amount of crystals and their morphology, on the surface; and automatic imaging of the chocolate surface under controlled illumination

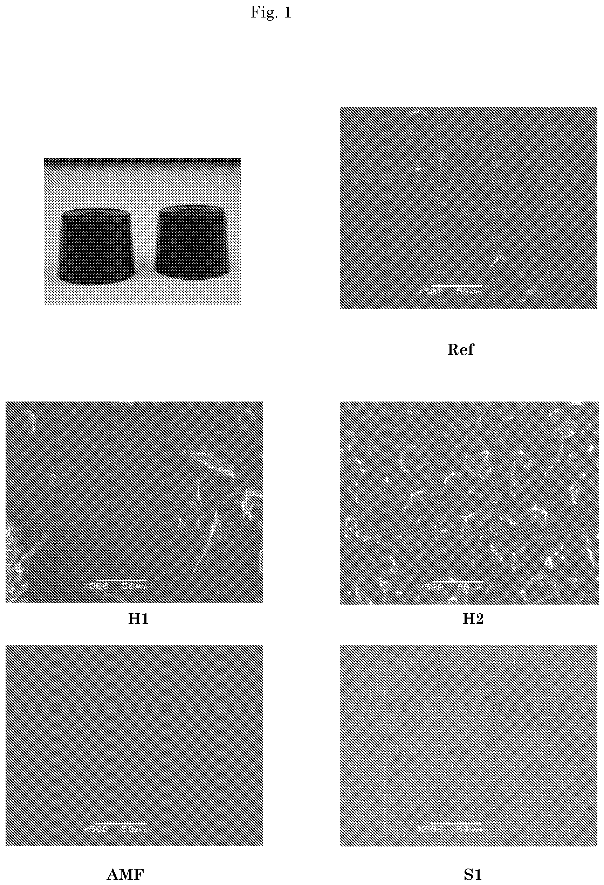

The occurrence of (visual) bloom over time was monitored. In Fig 1, SEM images representative of the surface of the respective filled chocolates, after 8 weeks storage at 20°C, are shown.

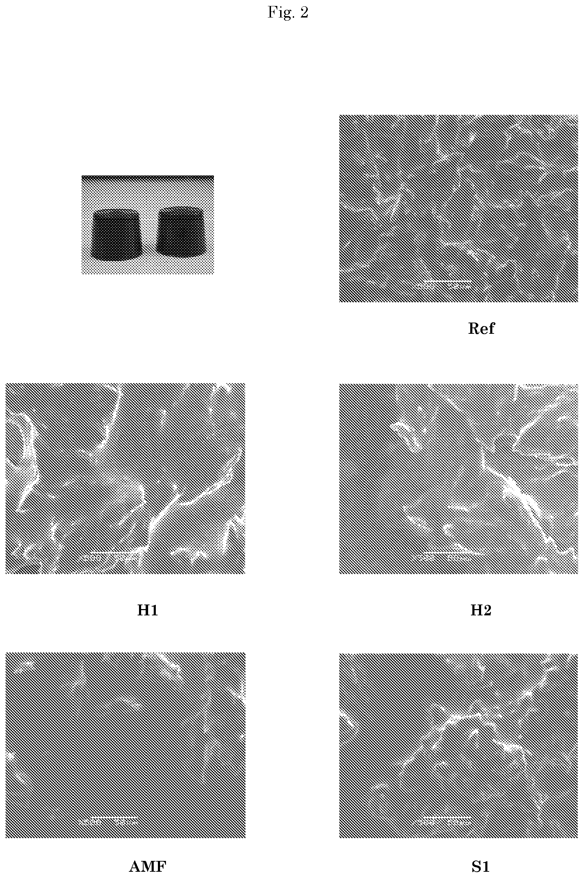

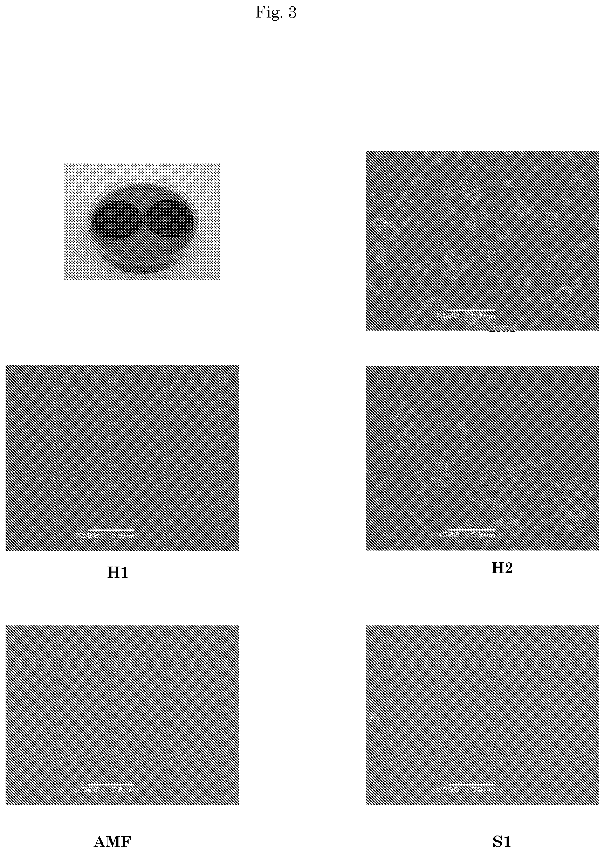

On the reference chocolate, some first fat bloom crystals protruding the surface could be noticed. For chocolate with H1 milk fat fraction, a small amount of larger crystals (compared to the reference) could be seen. On chocolate with milk fat fraction H2, it could be seen that the chocolate surface is already fully covered by fat bloom crystals (partially melted during the SEM imaging). On the other hand, no fat bloom crystals could be discovered on the filled chocolates with AMF and milk fat fraction S1. For the latter, a smooth surface without major irregularities was seen. SEM analysis was also performed on the model chocolate disks, placed in contact with the filling,
and stored for 8 weeks at 20°C (Fig. 3). In the case of chocolate with H2 milk fat fraction, very sharp fat bloom crystals could be noticed. After 8 weeks storage at 20°C, all other chocolates with added milk fat fraction H1 and S1 and AMF still showed a smooth surface without crystals.
In parallel the (filled) chocolates were also stored at 23°C . After 8 weeks, surface morphology was determined. Fig. 2 shows the SEM images of the pralines after 8 weeks storage at 23°C. For all chocolates studied, the surface is (partially) covered with fat bloom crystals. Compared to the reference, the fat bloom crystals on chocolate with milk fat fraction H1 and H2 are larger and show a different morphology. For chocolates with AMF or milk fat fraction S1, the surface is not completely covered with fat bloom crystals.

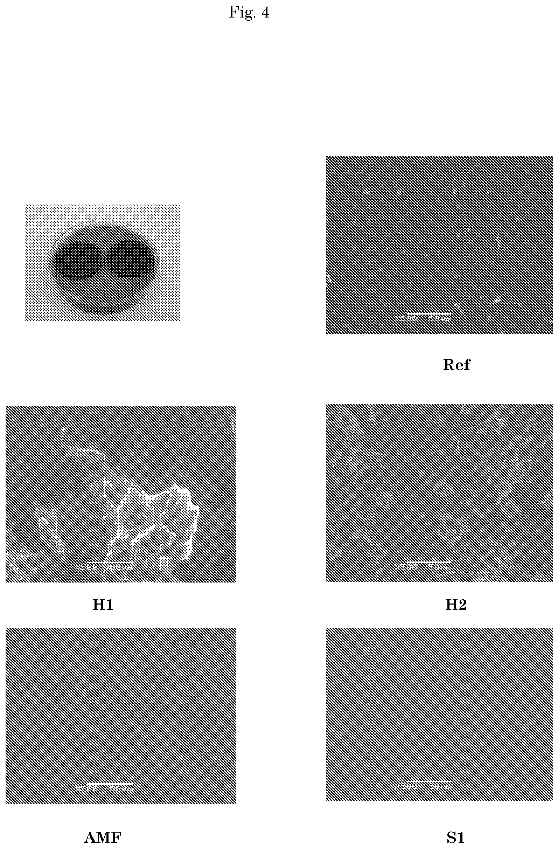

Fig. 4 shows the images of the thicker model chocolate disks, in contact with the filling, stored at 23°C for 8 weeks. For the reference chocolate, a small amount of tiny sharp crystals is just protruding trough the chocolate surface. This is in contrast to the much larger crystals noted for chocolate with milk fat fraction H1 and H2. On the other hand, a completely smooth surface is observed for chocolates with AMF and milk fat fraction S1.
After 10 weeks of storage, digital images were taken.
After 10 weeks storage at 20°C, the pralines still show some gloss, which has totally disappeared for their counterparts stored at 23°C. At 20°C, it can be seen that the chocolates with added milk fat fraction and AMF in general show less fat bloom compared to the reference chocolate without added milk fat. At 23°C, the reference chocolate and the chocolate with 3% milk fat fraction H1 show more pronounced bloom compared to the three other chocolates with milk fat. Concerning the model disks stored for 10 weeks at 23°C, the reference chocolate is homogeneously bloomed over the entire surface. In contrast, the chocolates with 3% milk fat fraction H1 and H2 show more pronounced bloom, but more heterogeneously distributed over the surface. The chocolate with AMF shows somewhat less bloom compared to the reference chocolate. Finally, the model chocolate disk of chocolate with 3% milk fat fraction S1 shows no bloom on the surface.

After 12 weeks storage at 23°C , SEM images of the surface of pralines, model chocolate disks in contact with filling and model chocolate disks (without being in contact with filling) were taken.
After 12 weeks storage at 23°C, pralines with the reference chocolate shows a fully bloomed surface, which partially melts under SEM imaging. The chocolates with added milk fat fraction all show more bloom at the side (fully bloomed) compared to the top (only locally bloomed), which can be attributed to a slightly thinner shell at the sides compared to the top. The chocolates with milk fat fraction H2, AMF and S1 show somewhat less bloom at the top part of the praline compared to the reference chocolate and the chocolate with milk fat fraction H1.
Also the model chocolate disks in contact with the filling can be distinguished after 12 weeks storage at 23°C. The reference chocolate and the chocolates with milk fat fraction H1 and H2 are fully bloomed (surface completely covered) and are swollen by the migrated oil. On the other hand, the chocolate disks with AMF locally show a light grey film, less bloom (surface only locally bloomed) compared to the above described chocolates and are not swollen. Finally, the chocolate disk with milk fat fraction S1 shows no fat bloom (only initial crystals protruding the surface can be noticed under SEM) and the gloss has not totally disappeared.
After 16 weeks storage at 20°C, the reference filled chocolates (without milk fat fraction) show a completely bloomed side surface while the top surface is only locally (centre) bloomed. On the SEM images, small crystals homogeneously distributed over the surface are noticed. In contrast, the chocolate with 3% added milk fat fraction H1 shows larger crystals over the entire surface. Visually the corresponding praline is totally bloomed. This is also the case for praline with milk fat fraction H2, but the bloom intensity is somewhat lower compared to H1. This can also be seen under the SEM as the crystals on the surface of chocolate with H2 milk fat fraction are somewhat smaller compared to those on the surface of chocolate with H1 milk fat fraction. The surface of the chocolates with AMF and milk fat fraction S1, however, was found to be smooth, even after 16 weeks of storage at 20°C. No fat bloom crystals could be observed under SEM.
For model chocolate disks in contact with the filling stored for 16 weeks at 20°C, the following observations could be made:
- Reference chocolate: light grey film (scattered small crystals), gloss totally disappeared
- Chocolate with milk fat fraction H1: chocolate is bloomed and saturated with oil
- Chocolate with milk fat fraction H2: chocolate is bloomed, but less swollen compared to H1
- Chocolate with AMF: no fat bloom, but the gloss is strongly decreased
- Chocolate with milk fat fraction S1: no fat bloom, but the gloss is strongly decreased

For model chocolate disks (no contact with the filling) stored for 16 weeks at 20°C, the degree of polymorphic bloom could be assessed from visual inspection:
- Reference chocolate: light grey film (local), gloss totally disappeared
- Chocolate with milk fat fraction H1: part of the surface is bloom
- Chocolate with milk fat fraction H2: visible bloom
- Chocolate with AMF: no visible fat bloom, gloss is strongly decreased
- Chocolate with milk fat fraction S1: no visible fat bloom, gloss is strongly decreased

### Example 2:

**Table: 6 milk fat fractions used**

| **SFC** | **S2** | **S3** | **S4** | **S5** | **S6** |
|---|---|---|---|---|---|
| 5 | 55 | 22 | 90 | 79 | 58 |
| 10 | 40 | 4 | 85 | 69 | 45 |
| 15 | 15 | 0.6 | 77 | 56 | 27 |
| 20 | 1 | 0 | 63 | 33 | 8 |
| 30 | 0.2 | 0 | 1 | 1 | 0 |
| 35 | 0 | 0 | 0.2 | 0.6 | 0 |
| 40 | 0 | 0 | 0 | 0 | 0 |

**Table 7. Dark chocolate composition (chocolate with milk fat fraction).**

| **Ingredient** | **Weight (w/w) %** |
|---|---|
| Prerefined sugar | 48.0 |
| Cocoa mass | 40.0 |
| Cocoa butter | 8.6 |
| Milk fat fraction | 3.0 |
| Lecithin | 0.4 |

**Table 8. Hazelnut filling composition.**

| **Ingredient** | **Weight (w/w) %** |
|---|---|
| Pre-refined sugar | 45 |
| Hazelnut paste | 25 |
| Palm oil | 30 |

Chocolate was evaluated for bloom formation by a trained panel with pictures and with SEM pictures. The chocolate was scored as follows:
0 Perfect gloss, no bloom
1 Gloss lost
2 Slight blooming on surface clearly visible
3 Surface completely bloomed

Chocolates were stored at temperatures of 20°C or 23°C, for 1-24 weeks. With each experiment, AMF was taken as reference.

**Table 9: pralines with filling stored at 20°C**

| T20 | AMF | S2 | S3 |
|---|---|---|---|
| Time | | | |
| 4 | 0 | 0 | 0 |
| 8 | 0 | 0 | 0 |
| 12 | 0 | 0 | 0 |
| 16 | 2 | 0 | 0 |
| 20 | 2 | 0 | 0 |
| 22 | 3 | 0 | 0 |
| 24 | 3 | 0 | 0 |

**Table 10: pralines with filling stored at 20°C**

| T20 | AMF | | | |
|---|---|---|---|---|
| Time | | S4 | S5 | S6 |
| 2 | 0 | 0 | 0 | 0 |
| 4 | 0 | 1 | 0 | 0 |
| 6 | 0 | 1 | 0 | 0 |
| 10 | 0 | 0 | 0 | 0 |
| 12 | 1 | 1 | 1 | 0 |
| 16 | 1 | 1 | 0 | 0 |
| 20 | 2 | 1 | 0 | 0 |
| 22 | 2 | 1 | 0 | 0 |
| 24 | 2 | 1 | 0 | 0 |

One sees that even very soft milk fat fractions (S2, S3) do not bloom after 24 weeks at 20°C, even when AMF shows full bloom. S2, S3, S5, S6, do not bloom at all after 24 weeks at 20°C. And S4 only shows some lost gloss after 12 weeks but does not show bloom, while AMF starts to shows bloom after 20 weeks.

**Table 11: pralines with filling at 23°C**

| T23 | AMF | | |
|---|---|---|---|
| Time | | S2 | S3 |
| 2 | 0 | 0 | 0 |
| 4 | 0 | 0 | 0 |
| 8 | 0 | 0 | 0 |
| 10 | 2 | 0 | 0 |
| 12 | 3 | 1 | 0 |
| 14 | 3 | 1 | 0 |
| 16 | 3 | 2 | 1 |
| 20 | 3 | 3 | 2 |
| 22 | 3 | 3 | 2 |
| 24 | 3 | 3 | 2 |

**Table 12: pralines with filling at 23°C**

| T23 | AMF | | | |
|---|---|---|---|---|
| Time | | S4 | S5 | S6 |
| 2 | 0 | 1 | 0 | 0 |
| 4 | 0 | 1 | 0 | 0 |
| 6 | 1 | 1 | 0 | 0 |
| 10 | 1 | 1 | 0 | 0 |
| 12 | 1 | 0 | 1 | 0 |
| 16 | 2 | 1 | 2 | 2 |
| 20 | 2 | 2 | 2 | 2 |
| 22 | 2 | 2 | 2 | 2 |
| 24 | 2 | 2 | 2 | 2 |

All soft fractions perform better than AMF in terms of bloom at 23°C. chocolates with these fractions bloom less and later than chocolate with bloom.

Scanning electron microscopy pictures were evaluated and scored:
1 no bloom
2 few visible white crystals
3 large number of visible white crystals
4 Large fraction of area covered with white crystals

**Table 13: praline with filling storage at 20°C**

| 20 degrees | | | |
|---|---|---|---|
| | | S2 | **S3** |
| Weeks | AMF | | |
| 4 | 0 | 0 | 0 |
| 8 | 0 | 0 | 0 |
| 16 | 2 | 0 | 0 |
| 24 | 4 | 3 | 0 |

**Table 14: praline with filling storage at 20°C**

| 20 degrees | | | | |
|---|---|---|---|---|
| | | S4 | S5 | S6 |
| Weeks | AMF | | | |
| 4 | 0 | 0 | 0 | 0 |
| 8 | 0 | 0 | 0 | 0 |
| 16 | 0 | 0 | 0 | 0 |
| 24 | 3 | 2 | 0 | 0 |

**Table 15: chocolate disc on filling at 20°C**

| 20 degrees | | | |
|---|---|---|---|
| | | S2 | S3 |
| Weeks | AMF | | |
| 4 | 0 | 0 | 0 |
| 8 | 0 | 0 | 0 |
| 16 | 1 | 0 | 1 |
| 24 | 4 | 2 | 2 |

**Table 16: chocolate disc on filling at 20°C**

| 20 degrees | | | | |
|---|---|---|---|---|
| | | S4 | S5 | S6 |
| Weeks | AMF | | | |
| 4 | 0 | 0 | 0 | 0 |
| 8 | 0 | 0 | 0 | 0 |
| 16 | 1 | 0 | 0 | 0 |
| 24 | 3 | 3 | 3 | 0 |

**Table 17: chocolate without filling at 20°C**

| 20 degrees | | | |
|---|---|---|---|
| | | S2 | **S3** |
| Weeks | AMF | | |
| 4 | 0 | 0 | 0 |
| 8 | 0 | 0 | 0 |
| 16 | 0 | 0 | 0 |
| 24 | 0 | 0 | 0 |

**Table 18: chocolate without filling at 20°C**

| 20 degrees | | | | |
|---|---|---|---|---|
| | | S4 | S5 | S6 |
| Weeks | AMF | | | |
| 4 | 0 | 0 | 0 | 0 |
| 8 | 0 | 0 | 0 | 0 |
| 16 | 0 | 0 | 0 | 0 |
| 24 | 0 | 0 | 0 | 0 |

**Table 19: praline with filling at 23°C**

| 23 degrees | | | |
|---|---|---|---|
| | | S2 | **S3** |
| Weeks | AMF | | |
| 4 | 0 | 0 | 0 |
| 8 | 4 | 1 | 0 |
| 12 | 4 | 4 | 0 |

**Table 20: praline with filling at 23°C**

| | | S4 | S5 | S6 |
|---|---|---|---|---|
| Weeks | AMF | | | |
| 4 | 0 | 0 | 0 | 0 |
| 8 | 0 | 0 | 0 | 0 |
| 12 | 0 | 0 | 0 | 0 |

**Table 21: disc on filling at 23°C**

| 23 degrees | | | |
|---|---|---|---|
| | | S2 | S3 |
| Weeks | AMF | | |
| 4 | 0 | 0 | 0 |
| 8 | 4 | 4 | 3 |
| 12 | 4 | 1 | 4 |

**Table 22: disc on filling at 23°C**

| 23 degrees | | | | |
|---|---|---|---|---|
| | | S4 | S5 | S6 |
| Weeks | AMF | | | |
| 4 | 0 | 0 | 0 | 0 |
| 8 | 0 | 0 | 0 | 0 |
| 12 | 0 | 0 | 0 | 0 |

**Table 23: chocolate without filling at 23°C**

| 23 degrees | | | |
|---|---|---|---|
| | | S2 | **S3** |
| Weeks | AMF | | |
| 4 | 0 | 0 | 0 |
| 8 | 0 | 0 | 0 |
| 12 | 0 | 0 | 0 |

**Table 24: chocolate without filling at 23°C**

| 23 degrees | | | | |
|---|---|---|---|---|
| | | S4 | S5 | **S6** |
| Weeks | AMF | | | |
| 4 | 0 | 0 | 0 | 0 |
| 8 | 0 | 0 | 0 | 0 |
| 12 | 0 | 0 | 0 | 0 |

As can be seen from the experiments, chocolate with milk fat fraction according to the invention is mostly comparable to chocolate with AMF and better to chocolate with harder stearin fractions. In some cases, especially under more challenging conditions, such as storage at 23°C, the chocolate with the soft milk fat fraction was even better than chocolate with AMF.

## Claims

1. Praline or filled chocolate comprising a chocolate composition as coating, said chocolate composition comprising a milk fat fraction wherein the milk fat fraction has a SFC30 of less than 30%.

2. Praline or filled chocolate according to claim 1 wherein the milk fat fraction of said chocolate composition has a SFC30 of less than 25%, preferably of less than 20%, preferably of less than 15%, preferably less than 10%, preferably of less than 5%.

3. Praline or filled chocolate according to claim 1 or 2 wherein the milk fat fraction of the chocolate composition has a SFC40 of less than 5%, preferably a SFC35 of less than 5%.

4. Praline or filled chocolate according to any of the previous claims wherein the chocolate composition comprises a milk fat fraction wherein the milk fat fraction is obtained by means other than organic-solvent fractionation.

5. Praline or filled chocolate according to any of the previous claims wherein the milk fat fraction of the chocolate composition has a SFC10 higher than 0%, preferably higher than 1%, preferably higher than 2%, preferably higher than 5%.

6. Praline or filled chocolate according to any of the previous claims wherein the milk fat fraction of the chocolate composition has a SFC20 of less than 60%.

7. Praline or filled chocolate according to any of the previous claims wherein the milk fat fraction of the chocolate composition has a SFC20 of less than 55%, preferably of less than 50%, preferably of less than 47%, more preferably less than 45%.

8. Praline or filled chocolate according to any of the previous claims wherein the milk fat fraction of the chocolate composition has a SFC20 of more than 5%, more preferably more than 10%, more preferably more than 15%, more preferably more than 40%.

9. Praline or filled chocolate according to any of the previous claims wherein the chocolate composition comprises up to 5 wt% of milk fat fractions, preferably 0.5-5wt% milk fat fraction, more preferably 1-4 wt% milk fat fraction, more preferably 1.5-3.5wt%, and most preferably 2-3 wt% milk fat fraction.

10. Method to produce a praline or filled chocolate according to any of claims 1-9 wherein a filling is provided and a chocolate composition coating is provided, wherein the chocolate composition coating is prepared in a process comprising the steps of
a) preparing a chocolate mixture by mixing a chocolate mass and sugar;
b) optionally cocoa butter or other fat is added to make the fat percentage of the chocolate mixture from 5 to 50 wt%;
c) optionally adding other ingredients;
d) refining the chocolate mixture;
e) conching the chocolate mixture;
f) tempering the chocolate mixture;
wherein the milk fat fraction as defined in claims 1-9 may be added in step (a) and/or after refining step (d) or conching step (e).

## Patentansprüche

1. Praline oder gefüllte Schokolade, umfassend eine Schokoladenzusammensetzung als Überzug, wobei die Schokoladenzusammensetzung eine Milchfettfraktion umfasst, wobei die Milchfettfraktion einen SFC30-Wert von weniger als 30 % aufweist.

2. Praline oder gefüllte Schokolade gemäß Anspruch 1, wobei die Milchfettfraktion der Schokoladenzusammensetzung einen SFC30-Wert von weniger als 25 %, vorzugsweise von weniger als 20 %, vorzugsweise von weniger als 15 %, vorzugsweise von weniger als 10 %, vorzugsweise von weniger als 5 % aufweist.

3. Praline oder gefüllte Schokolade gemäß Anspruch 1 oder 2, wobei die Milchfettfraktion der Schokoladenzusammensetzung einen SFC40-Wert von weniger als 5 %, vorzugsweise einen SFC35-Wert von weniger als 5 % aufweist.

4. Praline oder gefüllte Schokolade gemäß einem der vorstehenden Ansprüche, wobei die Schokoladenzusammensetzung eine Milchfettfraktion umfasst, wobei die Milchfettfraktion durch von Fraktionierung organischer Lösung verschiedene Mittel erhalten ist.

5. Praline oder gefüllte Schokolade gemäß einem der vorstehenden Ansprüche, wobei die Milchfettfraktion der Schokoladenzusammensetzung einen SFC 10-Wert von mehr als 0 %, vorzugsweise mehr als 1 %, vorzugsweise mehr als 2 %, vorzugsweise mehr als 5 % aufweist.

6. Praline oder gefüllte Schokolade gemäß einem der vorstehenden Ansprüche, wobei die Milchfettfraktion der Schokoladenzusammensetzung einen SFC20-Wert von weniger als 60 % aufweist.

7. Praline oder gefüllte Schokolade gemäß einem der vorstehenden Ansprüche, wobei die Milchfettfraktion der Schokoladenzusammensetzung einen SFC20-Wert von weniger als 55 %, vorzugsweise weniger als 50 %, vorzugsweise weniger als 47 %, bevorzugter weniger als 45 %, aufweist.

8. Praline oder gefüllte Schokolade gemäß einem der vorstehenden Ansprüche, wobei die Milchfettfraktion der Schokoladenzusammensetzung einen SFC20-Wert von mehr als 5 %, bevorzugter mehr als 10 %, bevorzugter mehr als 15 %, bevorzugter mehr als 40 %, aufweist.

9. Praline oder gefüllte Schokolade gemäß einem der vorstehenden Ansprüche, wobei die Schokoladenzusammensetzung bis zu 5 Gew.-% Milchfettfraktion, vorzugsweise 0,5-5 Gew.-% Milchfettfraktion, bevorzugter 1-4 Gew.-% Milchfettfraktion, bevorzugter 1,5-3,5 Gew.-%, und höchst bevorzugt 2-3 Gew.-% Milchfettfraktion, umfasst.

10. Verfahren zur Herstellung einer Praline oder von gefüllter Schokolade gemäß einem der Ansprüche 1-9, wobei eine Füllung bereitgestellt wird und ein Überzug aus Schokoladenzusammensetzung bereitgestellt wird, wobei der Überzug aus Schokoladenzusammensetzung durch ein Verfahren hergestellt wird, das die Schritte umfasst:
a) Herstellen eines Schokoladengemischs durch Mischen von einer Schokolademasse und Zucker;
b) gegebenenfalls Kakaobutter oder ein anderes Fett zugegeben wird, um einen Fettgehalt des Schokoladengemischs auf 5 bis 50 Gew.-% zu erhalten;
c) gegebenenfalls Zugeben anderer Inhaltsstoffe;
d) Raffinieren des Schokoladengemischs;
e) Conchieren des Schokoladengemischs;
f) Temperieren des Schokoladengemischs;
wobei die Milchfettfraktion gemäß Ansprüchen 1-9 bei Schritt (a) und/oder nach dem Raffinierschritt (d) oder dem Conchierschritt (e) zugegeben werden kann.

## Revendications

1. Chocolat praliné ou fourré comprenant une composition de chocolat en tant qu'enrobage, ladite composition de chocolat comprenant une fraction de matière grasse du lait, la fraction de matière grasse du lait ayant une SFC30 inférieure à 30 %.

2. Chocolat praliné ou fourré selon la revendication 1, dans lequel la fraction de matière grasse du lait de ladite composition de chocolat a une SFC30 inférieure à 25 %, de préférence inférieure à 20 %, de préférence inférieure à 15 %, de préférence inférieure à 10 %, de préférence inférieure à 5 %.

3. Chocolat praliné ou fourré selon la revendication 1 ou 2, dans lequel la fraction de matière grasse du lait de la composition de chocolat a une SFC40 inférieure à 5 %, de préférence une SFC35 inférieure à 5 %.

4. Chocolat praliné ou fourré selon l'une quelconque des revendications précédentes dans lequel la composition de chocolat comprend une fraction de matière grasse du lait, dans lequel la fraction de matière grasse du lait est obtenue par un moyen autre qu'un fractionnement par solvant organique.

5. Chocolat praliné ou fourré selon l'une quelconque des revendications précédentes dans lequel la fraction de matière grasse du lait de la composition de chocolat a une SFC10 supérieure à 0 %, de préférence supérieure à 1 %, de préférence supérieure à 2 %, de préférence supérieure à 5 %.

6. Chocolat praliné ou fourré selon l'une quelconque des revendications précédentes dans lequel la fraction de matière grasse du lait de la composition de chocolat a une SFC20 inférieure à 60 %.

7. Chocolat praliné ou fourré selon l'une quelconque des revendications précédentes dans lequel la fraction de matière grasse du lait de la composition de chocolat a une SFC20 inférieure à 55 %, de préférence inférieure à 50 %, de préférence inférieure à 47 %, plus préférablement inférieure à 45 %.

8. Chocolat praliné ou fourré selon l'une quelconque des revendications précédentes dans lequel la fraction de matière grasse du lait de la composition de chocolat a une SFC20 supérieure à 5 %, plus préférablement supérieure à 10 %, plus préférablement supérieure à 15 %, plus préférablement supérieure à 40 %.

9. Chocolat praliné ou fourré selon l'une quelconque des revendications précédentes dans lequel la composition de chocolat comprend jusqu'à 5 % en poids de fraction de matière grasse du lait, de préférence 0,5-5 % en poids de fraction de matière grasse du lait, plus préférablement 1-4 % en poids de fraction de matière grasse du lait, plus préférablement 1,5-3,5 % en poids, et le plus préférablement 2-3 % en poids de fraction de matière grasse du lait.

10. Procédé pour produire un chocolat praliné ou fourré selon l'une quelconque des revendications 1-9 dans lequel une garniture est utilisée et un enrobage de composition de chocolat est utilisé, l'enrobage de composition de chocolat étant préparé dans un processus comprenant les étapes de
a) préparation d'un mélange de chocolat par mélange d'une masse de chocolat et de sucre ;
b) éventuellement on ajoute du beurre de cacao ou une autre matière grasse pour amener le pourcentage de matière grasse du mélange de chocolat de 5 à 50 % en poids ;
c) éventuellement ajout d'autres ingrédients ;
d) affinage du mélange de chocolat ;
e) conchage du mélange de chocolat ;
f) tempérage du mélange de chocolat ;
la fraction de matière grasse du lait telle que définie dans les revendications 1-9 pouvant être ajoutée dans l'étape (a) et/ou après l'étape d'affinage (d) ou l'étape de conchage (e).
